# FASCICULE DE BREVET EUROPEEN

(11) **EP 2 263 420 B1**
(45) Date de publication et mention de la délivrance du brevet: **19.10.2011**
(21) Numéro de dépôt: 09728704.9
(22) Date de dépôt: 17.03.2009
(51) Int. Cl.: H05B 37/02

(54) **SYSTEME INTERACTIF ET PROCEDE DE COMMANDE D'ECLAIRAGES ET/OU DE DIFFUSION D'IMAGES**
INTERAKTIVES SYSTEM UND STEUERVERFAHREN ZUR BELEUCHTUNG UND/ODER BILDDIFFUSION
INTERACTIVE SYSTEM AND CONTROL METHOD FOR LIGHTING AND/OR IMAGE DIFFUSION

(30) Priorité: 17.03.2008 FR 0851719
(43) Date de publication de la demande: 22.12.2010
(73) Titulaire: Doublet, Antoine, 75013 Paris (FR)
(72) Inventeur: Doublet, Antoine, 75013 Paris (FR)
(74) Mandataire: Tanty, François
(86) Numéro de dépôt international: PCT/FR2009/050446
(87) Numéro de publication internationale: WO 2009/122091

(56) Documents cités:
- JP-A- 10 162 967
- US-A- 5 781 108
- US-A1- 2002 015 097
- US-A1- 2006 071 605
- US-B1- 6 548 967
- US-B1- 6 980 697

## Description

L'invention concerne un système interactif d'éclairage d'un objet basé sur la détection d'un observateur de cet objet par une caméra vidéo. US 6 548 967 B1 décrit un tel système et la présente invention se propose d'améliorer ce système.

L'invention a pour objet un système interactif d'éclairage d'un objet, par exemple un objet dans une vitrine ou dans un musée, ce système interactif comportant :
- une ou plusieurs sources lumineuses éclairant l'objet,
- une caméra dont le champ de vision est dirigé dans une direction s'éloignant de l'objet,
- un système de traitement de données provenant de la caméra et de commande de la ou des sources lumineuses,
le système de traitement étant agencé pour modifier l'éclairage de la ou des sources en fonction de la détection d'au moins une portion du visage d'une personne dans le champ d'observation de la caméra.

Un tel système interactif permet avantageusement d'animer une vitrine, afin d'en accroitre l'attractivité et peut permettre également de réaliser des économies d'énergie en évitant d'éclairer la vitrine en l'absence d'observateur.

Par ailleurs, l'objet éclairé par la ou les sources lumineuses peut être une pièce d'un musée.

La modification de l'éclairage peut comporter :
- l'allumage ou l'extinction de la ou des sources lumineuses commandées par le système interactif, et/ou
- le changement de couleur de la ou des sources lumineuses et/ou,
- l'augmentation ou la diminution de l'intensité lumineuse provenant d'une ou plusieurs des sources lumineuses.

L'allumage ou l'extinction peut se faire en tout ou rien ou progressivement, l'intensité lumineuse variant par exemple de façon progressive lors de l'allumage et/ou de l'extinction d'une source lumineuse.

L'objet observé est par exemple une pièce d'un musée susceptible d'être soumise à des contraintes d'éclairement cumulé maximal à ne pas dépasser sous peine de détérioration de ladite pièce.

L'invention permet de réduire au mieux l'éclairement d'un tel objet et d'éviter tout éclairage inutile de ce dernier, de telle sorte que l'objet puisse être exposé au public pendant une durée plus grande, sans craindre de dépasser la dose d'éclairement cumulé maximal admissible, l'objet n'étant éclairé que lorsqu'il est observé.

Le cas échant, l'analyse de l'image de la caméra peut permettre de détecter non seulement la présence du visage d'au moins une personne dans le champ d'observation de la caméra, mais également l'orientation du visage de cette personne, par exemple la direction du regard de la personne, ce qui peut permettre de réduire encore le risque de modifier inutilement l'éclairage de l'objet.

Le système interactif peut être configuré de manière à modifier de façon différenciée l'éclairage d'au moins deux sources lumineuses en fonction de l'orientation ainsi détectée. Par exemple, l'intensité peut être augmentée dans la zone vers laquelle le visage détecté observe.

Le cas échéant, le système interactif peut être agencé pour provoquer l'émission d'un contenu audiovisuel en complément de la modification de l'éclairage, ce contenu audiovisuel pouvant se rapporter à l'objet observé, il peut par exemple s'agir d'un commentaire sur l'objet lorsque celui-ci est une pièce de musée ou d'une publicité lorsque l'objet est exposé dans une vitrine pour la vente.

La caméra peut être dissimulée vis-à-vis des observateurs de l'objet, étant notamment placée derrière une surface semi-réfléchissante.

Lorsque le système interactif est destiné à être placé dans un musée, le système interactif peut comporter un compteur de durée d'éclairage, notamment dans le cas où l'objet est une pièce de musée soumise à une durée maximale d'exposition lumineuse.

Le système interactif peut être dépourvu de moyens de stockage de masse des images captées par la caméra ou de moyens d'envoi sur un serveur de ces images. Par « moyen de stockage de masse », il faut comprendre toute mémoire capable de stocker plusieurs Mo et Go de données, par exemple des cartes mémoire de type SD ou autres mémoires flashs, des disques durs, des bandes magnétiques ou encore des disques optiques.

Ainsi, le système interactif ne conserve pas en mémoire l'image des visages qui ont observé l'objet.

Le système interactif peut avantageusement être intégré dans une applique d'éclairage de l'objet, par exemple une applique murale, cette applique comportant par exemple un support pour sa fixation au mur ainsi qu'un ou plusieurs bras portant une ou plusieurs sources lumineuses, la caméra pouvant être solidaire d'au moins un bras et le système de traitement pouvant être disposé par exemple dans le support de fixation murale ou dans un boîtier supporté par l'un des bras précités.

La caméra peut être une caméra qui observe en lumière visible où infrarouge.

L'invention a encore pour objet, selon un autre de ses aspects, un procédé pour modifier automatiquement l'éclairage d'un objet éclairé par au moins une source lumineuse, notamment d'un objet dans une vitrine ou dans un musée, dans lequel:
- on acquiert une image à l'aide d'une caméra dont le champ de vision est dirigé dans une direction s'éloignant de l'objet,
- on détecte dans l'image acquise au moins une portion du visage d'une personne et,
- on modifie l'éclairage de la ou des sources en fonction de la détection effectuée à l'étape précédente.

La modification de l'éclairage peut comporter :
- l'allumage ou l'extinction de la ou des sources lumineuses, et/ou
- le changement de couleur de la ou des sources lumineuses et/ou,
- l'augmentation ou la diminution de l'intensité lumineuse provenant d'une ou plusieurs des sources lumineuses.

Le procédé peut comporter l'étape selon laquelle on détecte l'orientation du visage de la personne.

Un contenu audiovisuel peut être émis en complément de la modification de l'éclairage, ce contenu audiovisuel se rapportant par exemple à l'objet observé.

Le procédé peut être dépourvu d'étape selon laquelle on enregistre dans des moyens de stockage de masse des images captées par la caméra ou d'étape selon laquelle on envoie ces images à un serveur.

L'invention pourra être mieux comprise à la lecture de la description qui va suivre, d'exemples de mise en oeuvre non limitatifs de celle-ci, et à l'examen du dessin annexé, sur lequel :
- la figure 5 représente de manière schématique un exemple de système interactif d'éclairage d'un objet,
- les figures 6 et 7 illustrent la modification par le système interactif de l'éclairage de l'objet suite à la détection du visage d'une personne.

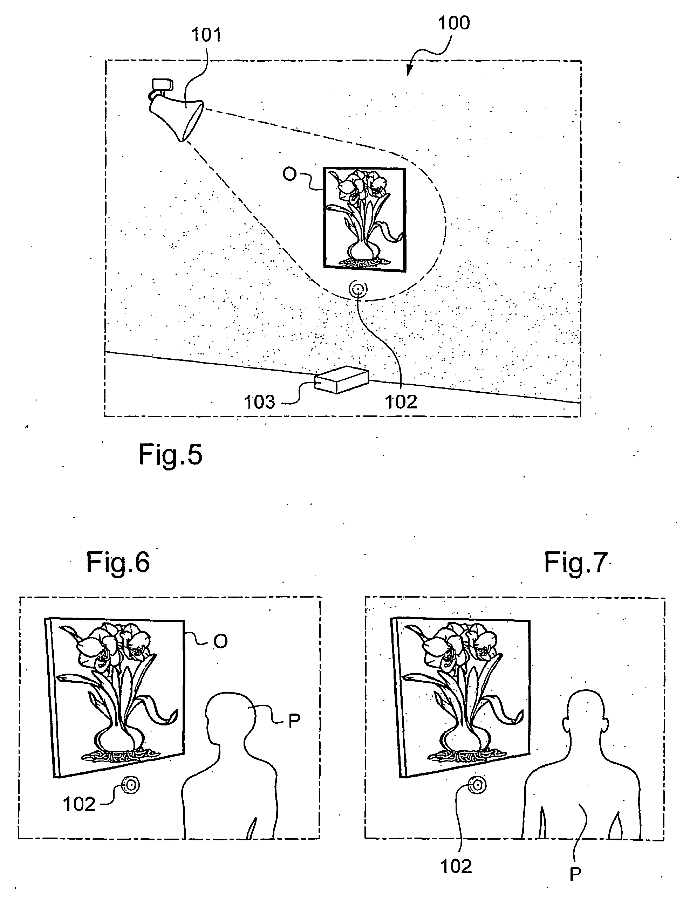

On va maintenant décrire en référence aux figures 5 à 7 un système interactif 100 selon l'invention.

Le système interactif 100 comporte au moins une source lumineuse 101, au moins une caméra 102 et au moins un système de traitement 103 pour traiter les images délivrées par la caméra et commander la ou les sources lumineuses 101 en fonction de ces images.

La caméra est par exemple dissimulée derrière une surface semi-réfléchissante non représentée.

Le système de traitement 103 est notamment agencé pour détecter le visage d'une personne P dans le champ d'observation de la caméra 102, lequel peut être dirigé dans une direction s'éloignant de l'objet O, c'est-à-dire vers un observateur éventuel de l'objet O.

Le système de traitement 103 met par exemple en oeuvre la méthode décrite dans la publication P. Viola, M. Jones « Rapid object détection using a boosted cascade of simple features » et dont une implémentation est disponible dans la librairie OpenCV (Open Source Computer Vision Library) rédigée par INTEL®.

Le système de traitement 103 peut mettre en oeuvre une boucle dans laquelle dans une première étape une image est acquise par la caméra 102, puis analysée et selon qu'un visage est détecté ou non dans cette image, l'éclairage de l'objet O est modifié.

Le système de traitement 103 peut comporter un micro-ordinateur ou tout autre moyen de calcul équivalent. La commande de l'éclairage peut s'effectuer à l'aide d'une interface spécialisée, l'éclairage étant par exemple commandé par courant porteur ou système radiofréquence ou infrarouge.

Par exemple, dans le cas de la détection d'un visage, l'intensité lumineuse des sources lumineuses 101 est incrémentée, par exemple progressivement, et dans le cas de l'absence de détection d'un visage, l'intensité est réduite progressivement à chaque itération de la boucle de traitement.

Dans l'exemple de la figure 5, l'objet O éclairé par le système interactif 100 est une pièce d'un musée, par exemple un tableau et le système de traitement 103 comporte un compteur de durée d'éclairage.

Dans une variante non représentée, le système de traitement interactif 100 comporte également un écran, par exemple un écran plat de type LCD et/ou un ou plusieurs haut-parleurs, de façon à ce que la modification de l'éclairage de la pièce observée O soit accompagnée de l'émission par le système interactif 100 d'un contenu audiovisuel se rapportant à ladite pièce.

Le système de traitement 103 peut, après avoir détecté la présence d'un visage dans le champ de vision de la caméra, déterminer l'orientation de ce visage, par exemple la direction du regard de l'individu.

La figure 6 illustre la modification d'éclairage mise en oeuvre par le système interactif 100 lorsque ce dernier détecte le visage d'un individu et modifie en conséquence l'éclairage de l'objet O.

La figure 7 illustre le cas où l'objet O n'est pas éclairé, le visage de l'individu n'étant plus détecté.

Dans un autre exemple non représenté, le système interactif 100 est intégré dans une applique d'éclairage de l'objet, par exemple une applique murale.

Dans une autre variante non représentée, l'objet O est placé dans une vitrine, par exemple chez un particulier ou dans un magasin.

L'expression "comportant un" doit être comprise comme étant synonyme de l'expression "comportant au moins un" sauf si le contraire est spécifié.

## Revendications

1. Système interactif (100) d'éclairage d'un objet (O), le système interactif comportant :
- une ou plusieurs sources lumineuses (101) éclairant l'objet (O),
- une caméra (102) dont le champ de vision est dirigé dans une direction s'éloignant de l'objet (O),
- un système de traitement de données (103) provenant de la caméra (102) et de commande de la ou des sources lumineuses (101),
le système de traitement (103) étant agencé pour modifier l'éclairage de la ou des sources (101) en fonction de la détection d'au moins une portion du visage d'une personne (P) dans le champ d'observation de la caméra (102).

2. Système interactif selon à revendication 1, la modification de l'èclairage comportant :
- l'allumage oui l'extinction de la ou des sources lumineuses (101) commandées par le système interactif, et/ou
- le changement due couleur de la ou des sources lumineuses (101) et/ou,
- l'augmentation ou la diminution de l'intensité lumineuse provenant d'une ou plusieurs des sources lumineuses (101).

3. Système interactif selon la revendication 2, la modification de l'éclairage comportant l'allumage ou l'extinction de façon progressive de l'intensité lumineuse des sources lumineuses (101).

4. Système interactif selon l'une quelconque des revendications 1 à 3, l'analyse de l'image de li caméra (102) permettant de détecter l'orientation du visage de la personne (P), notamment la direction de son regard.

5. Système interactif selon la revendication 4, étant configuré de manière à modifier de façon différenciée l'éclairage d'au moins deux sources lumineuses en fonction de l'orientation du visage détectée.

6. Système interactif selon l'une quelconque des revendications 1 à 5, étant agencé pour provoquer l'émission d'un contenu audiovisuel en complément de la modification de l'éclairage, ce contenu se rapportant à l'objet observé.

7. Système interactif selon l'une quelconque des revendications 1 à 6, comportant un compteur de durée d'éclairage.

8. Système interactif selon l'une quelconque des revendications 1 à 7, étant dépourvu de moyens due stockage de masse des images captées par la caméra (102) ou de moyens d'envoi sur un serveur de ces images.

9. Système interactif selon l'une quelconque des revendications 1 à 8, étant intégré dans une applique d'éclairage de l'objet (0),

10. Système interactif selon l'une quelconque des revendications 1 à 9, la caméra (102) étant agencée pour observer en lumière visible où infrarouge.

11. Procédé pour modifier automatiquement l'éclairage d'un objet (0) éclairé par an moins une source lumineuse (101), notamment d'un objet dans une vitrine ou dans un musée, dans lequel:
- on acquiert une image à l'aide d'une caméra (102) dont le champ de vision est dirigé dans une direction s'éloignant de l'objet (O),
- on détecte dans l'image acquise au moins une portion du visage d'une personne (P) et,
- on modifie l'éclairage de la ou des sources (101) en fonction de la détection effectuée à l'étape précédente.

12. Procédé selon la revendication 11, dans lequel met modifie l'éclairage sen :
- allumant ou éteignant la ou tes sources lumineuses (101), et/ou
- changeant la couleur de la ou des sources lumineuses (101) et/ou,
- augmentant ou diminuant l'intensité lumineuse provenant d'une ou plusieurs des sources lui (101).

13. Procédé selon la revendication 1 ou 12, dans lequel en détecte l'orientation du visage de lia personne (P).

14. Procédé selon l'une quelconque des revendications 11 à 13, dans lequel un contenu audiovisuel est émis en complément de la modification de l'éclairage, ce contenu audiovisuel se rapportant notamment à l'objet (O) observe.

15. Procède selon l'une quelconque des revendications 11 à 14, étant dépourvu d'étape selon laquelle on enregistre dans des moyens de stockage de masse des images captées par la caméra ou d'étape selon laquelle on envoie ces images à un serveur.

## Claims

1. An interactive system (100) to light an object (0), the interactive system comprising:
• one or more light sources (101) lighting the object (0);
• a camera (102) having its field of view directed in a direction away from the object (0); and
• a data processor system (103) configured to process the data coming from the camera (102) and to control the light source(s) (101);
the processor system (103) being configured to modify the lighting delivered by the light source(s) (101) as a function of detecting at least a portion of the face of a person (p) in the field of observation of the camera (102).

2. An interactive system according to claim 1, the modification to the lighting comprising at least one of:
• switching on or off the light source(s) (101) controlled by the interactive system;
• changing the color of the light source(s) (101); and
• increasing or decreasing the intensity of light provided by one or more of the light sources (101).

3. An interactive system according to claim 2, the lighting modification including switching the lighting intensity of the light sources (101) on or off in progressive manner.

4. An interactive system according to any one of claims 1 to 3, the analysis of the image from the camera (102) making it possible to detect the orientation of the face of the person (p), is particular the direction of his glance.

5. An interactive system according to claim 4, being configured in such a manner as to modify the lighting from at least two light sources differently as a function of the detected orientation of the face.

6. An interactive system according to any one of claims 1 to 5, being configured to cause audiovisual content to be played back in addition to modifying lighting, the content relating to the observed object.

7. An interactive system according to any one of claims 1 to 6, including a meter configured to meter the duration of lighting.

8. An interactive system according to any one of claims 1 to 7, the system not including any means for bulk storage of the images picked up by the camera (102) nor any means for sending said images to a sever,

9. An interactive system according to any one of claims 1 to 8, the system being incorporated in a fitting for lighting the object.

10. An interactive system according to any one of claims 1 to 9, the camera being configured to observe in visible light or in infrared light.

11. A method of automatically modifying the lighting of an object (0) lighted by at least one light source (101), in particular an object behind a window or in a museum, the method comprising:
• acquiring an image by means of a camera (102) having its field of view directed in a direction away from the object (0);
• detecting in the acquired image at least a portion of the face of a person (p); and
• modifying the lighting of the source(s) (101) as a function of the detection performed in the preceding step.

12. A method according to claim 11, wherein the lighting is modified by at least one of :
• switching on or off the light source(s) (101);
• changing the color of the light source(s) (101);
• increasing or decreasing the light intensity coming from one or more of the light sources (101).

13. A method according to claim 11 or 12, wherein the orientation of the face of the person (p) is detected.

14. A method according to any one of claims 11 to 13, wherein audiovisual content is issued in addition to modifying the lighting, this audiovisual content relating in particular to the object (0) observed.

15. A method according to any one of claims 11 to 144. not including any step whereby images picked up by the camera are stored in bulk storage means or any step whereby said images are sent to a server.

## Patentansprüche

1. Interaktives System (100) für die Beleuchtung eines Gegenstands (O), wobei das interaktive System umfasst:
- eine oder mehrere Lichtquellen (101), die den Gegenstand (O) beleuchten,
- eine Kamera (102), deren Gesichtsfeld in eine vom Gegenstand (O) weg weisende Richtung orientiert ist,
- ein System (103) zum Verarbeiten von Daten, die von der Kamera (102) stammen, und zum Steuern der einen oder der mehreren Lichtquellen (101),
wobei das Verarbeitungssystem (103) dazu ausgelegt ist, die Beleuchtung der einen oder der mehreren Quellen (101) als Funktion der Detektion wenigstens eines Abschnitts des Gesichts einer Person (P) im Beobachtungsfeld der Kamera (102) zu modifizieren.

2. Interaktives System nach Anspruch 1, wobei das Modifizieren der Beleuchtung umfasst:
- Einschalten oder Ausschalten der einen oder der mehreren Lichtquellen (101), die durch das interaktive System gesteuert werden, und/oder
- Ändern der Farbe der einen oder der mehreren Lichtquellen (101) und/oder
- Erhöhen oder Verringern der Lichtstärke, die von einer oder von mehreren der Lichtquellen (101) ausgeht.

3. Interaktives System nach Anspruch 2, wobei das Modifizieren der Beleuchtung das allmähliche Einschalten oder Ausschalten der Lichtstärke der Lichtquellen (101) umfaßt.

4. lnteraktives System nach einem der Ansprüche 1 bis 3, wobei die Analyse des Bildes der Kamera (102) die Detektion der Orientierung des Gesichts der Person (P), insbesondere ihre Blickrichtung, ermöglicht.

5. interaktives System nach Anspruch 4, das konfiguriert ist, um die Beleuchtung von wenigstens zwei Lichtquellen als Funktion der detektierten Gesichtsorientierung unterschiedlich zu modifizieren.

6. Interaktives System nach einem der Ansprüche 1 bis 5, das dazu ausgelegt ist, die Aussendung eines audiovisuellen Inhalts ergänzend zur Modifikation der Beleuchtung zu bewirken, wobei sich dieser Inhalt auf den betrachteten Gegenstand bezieht.

7. Interaktives System nach einem der Ansprüche 1 bis 6, das einen Zähler für die Beleuchtungsdauer umfasst.

8. Interaktives System nach einem der Ansprüche 1 bis 7, das keine Massenspeichermittel für von der Kamera (102) aufgenommene Bilder und keine Mittel zum Schicken dieser Bilder zu einem Server umfasst.

9. Interaktives System nach einem der Ansprüche 1 bis 8, das in ein Beleuchtungsmittelfür den Gegenstand (O) integriert ist.

10. Interaktives System nach einem der Ansprüche 1 bis 9, wobei die Kamera (102) dazu ausgelegt ist, bei sichtbarem Licht oder Infrarotlicht zu beobachten.

11. Verfahren zum automatischen Modifizieren der Beleuchtung eines Gegenstands (O), der durch wenigstens eine Lichtquelle (101) beleuchtet wird, insbesondere eines Gegenstands in einer Vitrine oder in einem Museum, wobei:
- mit Hilfe einer Kamera (102), deren Gesichtsfeld in eine vom Gegenstand (O) weg weisende Richtung orientiert ist, ein Bild aufgenommen wird,
- in dem aufgenommenen Bild wenigstens ein Abschnitt des Gesichts einer Person (P) detektiert wird,
- die Beleuchtung der einen oder der mehreren Lichtquellen (101) als Funktion der im vorhergehenden Schritt erfolgten Detektion modifiziert wird.

12. Verfahren nach Anspruch 11, wobei die Beleuchtung **dadurch** modifiziert wird, dass:
- die eine oder die mehreren Lichtquellen (101) eingeschaltet oder ausgeschaltet werden und/oder
- die Farbe der einen oder der mehreren Lichtquellen (101) geändert wird und/oder
- die Lichtstärke, die von einer oder von mehreren der Lichtquellen (101) ausgeht, erhöht oder verringert wird.

13. Verfahren nach Anspruch 11 oder 12, wobei die Orientierung des Gesichts der Person (P) detektiert wird.

14. Verfahren nach einem der Ansprüche 11 bis 13, wobei zusätzlich zu der Modlflzierung der Beleuchtung ein audiovisueller Inhalt ausgesendet wird, wobei sich dieser audiovisuelle Inhalt insbesondere auf den betrachteten Gegenstand (O) bezieht.

15. Verfahren nach einem der Ansprüche 1 bis 14, das keinen Schritt, indem in Massenspeichermitteln durch die Kamera aufgenommene Bilder aufgezeichnet werden, oder keinen Schritt, indem diese Bilder zu einem Server geschickt werden, umfaßt
